# FASCICULE DE BREVET EUROPEEN

(11) **EP 2 231 542 B1**
(45) Date de publication et mention de la délivrance du brevet: **11.09.2013**
(21) Numéro de dépôt: 08856014.9
(22) Date de dépôt: 21.11.2008
(51) Int. Cl.: C03C 25/16, D06B 3/18, C03C 25/10, C03C 25/26, D06B 3/04

(54) **TISSU DE FILS ET SON PROCEDE DE FABRICATION**
GARNGEWEBE UND HERSTELLUNGSVERFAHREN DAFÜR
YARN FABRIC AND ITS MANUFACTURING PROCESS

(30) Priorité: 21.11.2007 FR 0759198
(43) Date de publication de la demande: 29.09.2010
(73) Titulaire: Porcher Industries, 38300 Badinières (FR)
(72) Inventeur: POLLET, Laurence, F-69005 Lyon (FR); PORCHERET, Jacques, F-38340 Veyssilieu (FR)
(74) Mandataire: Colombet, Alain André
(86) Numéro de dépôt international: PCT/FR2008/052098
(87) Numéro de publication internationale: WO 2009/071812

(56) Documents cités:
- WO-A-03/000979
- WO-A-2005/077853
- JP-A- 6 207 376
- US-A- 3 817 211
- US-A- 4 530 876
- US-A- 5 312 687
- US-A1- 2003 026 914
- US-B1- 6 593 255
- US-B1- 6 643 901

## Description

L'invention concerne un tissu de fils, ainsi que son procédé de fabrication.

Le tissu de fils conforme à l'invention est susceptible d'être utilisé dans de nombreux domaines techniques. On citera, entre autres, l'isolation électrique, l'électronique, l'isolation acoustique et thermique, ainsi que les bandes transporteuses.

De manière typique, les fils constitutifs de ce tissu sont plus particulièrement, mais non exclusivement, réalisés en verre. A titre d'alternative, on peut aussi prévoir d'utiliser entre autres du polyester, du polyamide, ou encore du carbone.

Ces fils sont formés à partir de plusieurs filaments, dont le nombre est typiquement compris entre deux et vingt-quatre mille. Dans le cas du verre, chaque filament présente un diamètre compris entre 3 et 15 micromètres, le diamètre total du fil étant compris entre 0,01 mm et 1 cm.

Le tissu conforme à l'invention présente une masse surfacique généralement comprise entre 15 et 500 g/m². Dans le cas de l'isolation électrique, cette masse est avantageusement inférieure à 50 g/m², alors qu'elle est voisine de 200 g/m² pour les bandes transporteuses, et supérieure à 200 g/m² pour l'isolation thermique et acoustique.

Un tel tissu est formé, de manière classique, par le croisement de différents fils, qui sont dénommés respectivement fils de chaîne et fils de trame. Afin de lubrifier et de protéger les fils de chaîne pendant l'opération de tissage, il est connu de les revêtir au moyen d'agents d'encollage, après l'opération d'ourdissage (en anglais « warping ») consistant à placer ces différents fils de chaîne parallèlement les uns aux autres.

Les principaux agents d'encollage peuvent être divisés en deux classes. Il s'agit tout d'abord d'agents à base de polysaccharides naturels, notamment l'amidon, les dérivés d'amidon tels que l'amidon carboxyméthylique ou l'éther d'amidon hydroxyéthylique, les dérivés de cellulose, en particulier la cellulose carboxyméthylique (CMC), les galactomannanes, ou encore les dérivés de protéine.

On peut également faire appel à des polymères entièrement synthétiques. Dans ce cas, il s'agit par exemple des alcools polyvinyliques (PVA), des polyacrylates, de l'acétate polyvinylique, ou encore du polyester.

De façon habituelle, la formulation des agents d'encollage fait appel à un mélange des substances mentionnées ci-dessus. Après sa préparation, l'agent d'encollage est déposé par imprégnation sur les fils, au moyen d'un foulard ou d'une enduction par léchage.

Il est à noter que cette étape d'encollage ne doit pas être confondue avec une éventuelle étape d'enduction. En effet, cette dernière concerne le traitement du tissu proprement dit, à savoir postérieurement à l'étape de tissage. De plus, dans l'enduction, on fait appel à une quantité de matière auxiliaire bien supérieure à celle utilisée dans l'encollage.

En effet, dans l'étape d'encollage, le dépôt de polymère présente une quantité faible, typiquement comprise entre 0,5 et 5 % en poids. Le polymère d'encollage est le plus souvent présent en phase aqueuse. Le bain d'encollage est constitué de 1 à 50 % de polymère dans l'eau, ce polymère étant soit dispersé, soit solubilisé. Au terme de l'étape d'encollage décrite ci-dessus, chaque fil de chaîne est revêtu d'une gaine sensiblement continue, qui recouvre l'ensemble de sa périphérie.

Puis, on tisse les fils de chaîne encollés et les fils de trame, uniquement revêtus d'un ensimage. On notera que l'encollage, qui sert à protéger les fils de chaîne à l'égard des efforts de torsion ou de pliage, n'est pas utilisé pour revêtir les fils de trame, qui ne sont pas soumis à de tels efforts lors du tissage.

US-A-6,593,255, WO-A-2005/077853 et US-A-6,643,901 décrivent l'incorporation de particules solides à une composition destinée au coating de fils événtuellment ensimés, mais dépourvus de tout encollage. En particulier, la technique décrite dans ces documents doit permettre la pénétration des particules solides entre les filaments constitutifs des fils, afin de créer des espaces interstitiels entre les filaments. Les deux premiers documents visent notamment l'obtention de fils destinés à être manipulés par jets d'air, et ces techniques sont généralement destinées à la manipulation et à la mise en place des fils de trame. Si cette technologie est décrite comme pouvant être mise en oeuvre pour incorporer des particules conférant diverses propriétés d'usage aux tissus, elle est techniquement compliquée et requiert une mise en oeuvre spécifique.

Ceci étant précisé, l'invention se propose de réaliser un tissu de fils dont les fils de chaîne sont encollés, qui soit susceptible de présenter des propriétés améliorées, dans des domaines différents. L'invention vise également à proposer un procédé de fabrication de ce tissu, qui soit sensiblement peu modifié par rapport aux procédés habituels de l'état de la technique, faisant appel à une étape d'encollage.

A cet effet, elle a pour objet un tissu de fils, selon la revendication 1.

Selon d'autres caractéristiques :
- avec l'encollage, le dépôt de polymère ou d'organique sur le fil représente une quantité comprise entre 0,5 et 5 % en poids par rapport au poids du fil + le polymère, de préférence de 0,5 à 2% en poids ;.
- la charge est présente dans l'encollage sous forme particulaire ;
- les particules de charge sont dispersées dans l'encollage ;
- la plus grande dimension des particules de charge, dispersées dans l'encollage, est inférieure à 100 micromètres, de préférence à 50 micromètres ; les particules de charge peuvent avoir des dimensions comprises entre 10 nm et 100 µm, de préférence entre 100 nm et 50 µm ;
- les particules de charge sont présentes sous forme granulaire, ou sous forme de plaquettes, ou sous forme lamellaire, ou sous forme tubulaire, ou sous forme de fibrilles, ou sous forme de fibres, ou sous forme de sphères creuses ou pleines, ou encore sous forme de cristaux ;
- les particules de charge sont minérales, organiques ou métalliques ;
- les fils sont réalisés en un matériau artificiel organique ou inorganique, ou en matériau naturel ;
- les fils sont réalisés en verre, en polyester, en polyamide ou en carbone ;
- les fils sont formés à partir de plusieurs filaments ;
- la charge est propre à augmenter la conductivité thermique du tissu ;
- la charge comprend ou est formée de nitrure de bore, de nitrure d'alumine, d'alumine, de CaCO₃, de particules de cuivre, ou de nanotubes de carbone.

L'invention a également pour objet un procédé de fabrication du tissu ci-dessus, selon la revendication 9.

Par « nu », on entend un fil dépourvu d'encollage ou de coating et pouvant, notamment s'il s'agit de verre, avoir été traité par ensimage. De préférence, le fil de verre est formé de plusieurs filaments et comporte un ensimage.

Selon d'autres caractéristiques :
- on ajoute directement les particules de charge dans le bain primaire ;
- on forme une suspension de type « slurry » (suspension concentrée) à partir desdites particules de charge, avant d'incorporer cette suspension dans le bain primaire ;
- le bain primaire d'encollage est formé par un polymère d'encollage proprement dit, ou est formé par une solution de ce polymère dans de l'eau, ou encore est formé par une dispersion de ce polymère dans de l'eau avec ajout de tensioactifs ;
- la proportion de charges dans le bain final d'encollage est comprise entre 0,05 et 50 % en poids, de préférence entre 0,05 et 10 %.

Le fil de chaîne peut être formé de plusieurs filaments et revêtu d'un encollage de polymère organique, ledit polymère organique étant en proportion de 0,5 à 5%, de préférence de 0,5 à 2% en poids par rapport au fil + polymère, où des particules de charge sont dispersées au sein de l'encollage. Le fil peut avoir une ou plusieurs des autres caractéristiques évoquées dans le reste du document. Notamment, le fil peut être réalisé en un matériau artificiel organique ou inorganique, par exemple en verre, en polyester, en polyamide ou en carbone. Il peut être ensimé. La charge peut être une charge propre à augmenter la conductivité thermique du tissu. La charge peut comprendre ou être formée de nitrure de bore, de nitrure d'alumine, d'alumine, de CaCO₃, de particules de cuivre, ou de nanotubes de carbone.

Le procédé de fabrication d'un tel fil, comprend le passage d'un fil ensimé dans un bain d'encollage comprenant les particules de charge. De préférence, plusieurs fils sont amenés à passer simultanément dans un tel bain comme il est décrit ailleurs, par exemple après alignement des fils lors d'une étape préalable d'ourdissage. Le bain d'encollage peut être préparé comme décrit par ailleurs.

Lorsqu'on parle d'encollage sur le fil, on entend l'encollage à l'état final, après séchage ou durcissement.

L'invention va être décrite ci-après, en référence aux dessins annexés, donnés uniquement à titre d'exemple non limitatif, dans lesquels :
- la figure 1 est une vue schématique, illustrant la mise en oeuvre d'un procédé de fabrication d'un tissu de fils conforme à l'invention ;
- la figure 2 est une vue de face, illustrant le tissu de fils ainsi obtenu ; et
- la figure 3 est une vue en coupe longitudinale, illustrant un fil de chaîne encollé appartenant au tissu de la figure 2.

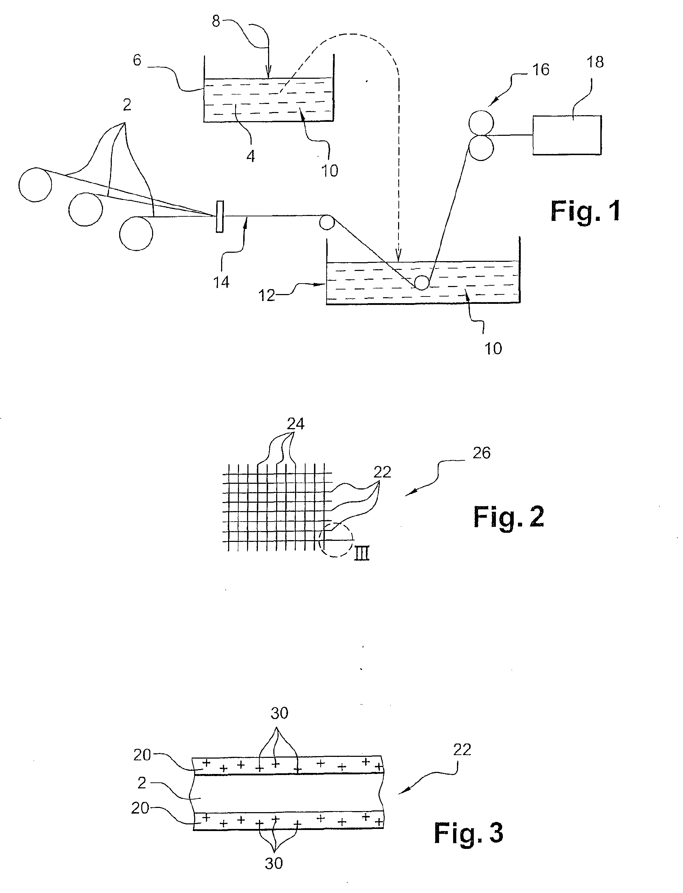

Le procédé conforme à l'invention, illustré en référence à la figure 1, fait tout d'abord appel à différents fils « nus », destinés à être encollés. Après leur encollage, ces fils seront tissés en tant que fils de chaîne, comme cela sera décrit dans ce qui suit.

Ces fils, dont chacun est désigné par la référence 2, présentent les caractéristiques décrites ci-dessus, dans le préambule de la présente description. Ils sont en particulier formés de plusieurs filaments, en étant par exemple réalisés en verre. Cependant, à titre d'alternative, on peut prévoir qu'ils sont réalisés en polyester, en polyamide ou encore en carbone. Ces fils de chaîne nus 2 sont alors soumis à une étape d'encollage.

A cet effet, on prépare tout d'abord un bain primaire d'encollage, désigné dans son ensemble par la référence 4, qui est réalisé de manière classique et se trouve stocké dans un récipient 6. Ce bain primaire 4 est par exemple composé du polymère d'encollage proprement dit, qui est notamment du PVA, ainsi que d'eau et de tensioactifs. Il s'agit alors d'une dispersion.

A titre de variante, on peut utiliser un bain primaire sous forme d'une solution de polymère et d'eau. A titre de variante supplémentaire, on peut utiliser un bain d'encollage primaire qui est sensiblement constitué de polymère seul. Ces différentes possibilités sont bien connues de l'homme du métier, de sorte qu'elles ne seront pas décrites de manière plus précise dans le présent texte.

Les conditions opératoires du bain primaire sont également de type habituel dans l'état de la technique. Ainsi, ce bain présente par exemple une température voisine de l'ambiante, ainsi qu'une viscosité comprise par exemple entre 10 et 500 mPa.s.

Il s'agit alors d'ajouter, au bain primaire 4, au moins une charge susceptible de modifier les propriétés du tissu final. A titre non limitatif, on va lister dans ce qui suit différents types de charge susceptibles d'être utilisées dans le cadre de la présente invention.

On peut tout d'abord employer des charges susceptibles d'améliorer les propriétés mécaniques du tissu. Il peut s'agir de fibres de verre, de carbone, de fibres naturelles, synthétiques ou de cellulose. Les différentes fibres ci-dessus sont de type « courtes » à savoir qu'elles présentent des dimensions inférieures à 100 micromètres. On peut également utiliser des charges minérales, en particulier telles que du CaCO₃, du talc, de la silice, des microsphères ou encore des nanocharges. On peut enfin utiliser une charge organique, telle que les copolymères à blocs.

Dans le cadre de l'invention, on peut également utiliser des charges susceptibles d'améliorer l'apparence du tissu. Il s'agit notamment de pigments ou de colorants, éventuellement de type interférentiel, photochromique ou thermochromique, ainsi que de particules de terre rares propres à assurer une fonction d'authentification.

On peut également utiliser des charges propres à conférer au tissu une résistance améliorée à la température. Il peut s'agir de fibres de verre, de carbone, de fibres naturelles ou synthétiques. On peut également prévoir des antioxydants, des nanocharges, des stabilisants thermiques tels que des sels métalliques barium-zinc, ou encore de l'huile de soja époxydée.

Certaines charges, pouvant être utilisées par l'invention, sont de nature à améliorer la résistance à la lumière du tissu. Il s'agit par exemple d'absorbeurs d'ultraviolets, de HALS (Hindered Amine Light Stabilizer), de nanocharges, de dioxyde de titane, de benzophénones, ou encore de benzotriazoles.

On peut également utiliser des charges susceptibles d'améliorer la résistance au feu du tissu. Il s'agit par exemple de composés halogénés, de stannates de zinc, de composés phosphorés, de particules intumescentes, de nanocharges, de trihydrates d'alumine ou encore de borates de zinc.

On peut également utiliser des charges qui peuvent améliorer les propriétés de conduction électrique du tissu. Il peut s'agir de fibres de carbone, de billes de verre, de nanotubes de carbone, de polymères conducteurs, tels que des polyanilines, ou encore de particules métallisées.

Les propriétés conductrices thermiques du tissu peuvent également être améliorées, en utilisant des charges spécifiques conformément à l'invention. Il s'agit par exemple de nitrure de bore, de nitrure d'alumine, d'alumine, de CaCO₃, ou encore de particules de cuivre, ou de nanotubes de carbone.

Conformément à l'invention, on peut également utiliser des charges propres à conférer des propriétés améliorées de couplage au tissu. Il s'agit par exemple de charges organiques, telles que des organosilanes, des organozircoaluminates, des isocyanates, des mélamines, du polyamideimide, ou encore des polymères fonctionnalisés.

L'invention peut également faire appel à des charges, en tant qu'agents gonflants. Il s'agit alors par exemple de bicarbonate de sodium, d'hydrocarbones, de fluorocarbones, ou encore d'azodicarbonamides.

Des charges de silicone peuvent être utilisées également, en tant qu'aide au procédé, grâce à leurs propriétés lubrifiantes.

On peut également utiliser, en tant qu'agents antibactériens, biocides ou antifongiques, d'autres charges spécifiques. Il s'agit alors par exemple d'ammonium quaternaire, de chitosane, de sels d'argent, ou encore de nanoargent.

On peut également utiliser des charges propres à conférer au tissu des propriétés acoustiques améliorées. Il s'agit par exemple de microsphères de verre, ou encore d'aérogels de silice.

D'autres charges peuvent être utilisées, en vue d'améliorer les capacités de recyclage du tissu. Il s'agit par exemple de charges photocatalytiques, du type TiO₂.

Enfin, certaines charges sont susceptibles d'améliorer les propriétés d'isolant thermique du tissu. Il s'agit notamment de molécules à changement de phases, telles que des cires encapsulées.

De façon avantageuse, on utilise les charges, telles que par exemple celles listées ci-dessus, sous forme particulaire. Au sens de l'invention, ces particules peuvent être des granules, des plaquettes, des lamelles, des tubes, des fibrilles, des fibres, des sphères creuses ou pleines, ou encore des cristaux.

De façon avantageuse, la plus grande dimension de ces particules de charge est inférieure à 100 micromètres, de préférence inférieure à 50 micromètres.

On peut envisager deux possibilités, en vue de la dispersion des charges dans le bain primaire 4. Ainsi, il est tout d'abord possible d'incorporer directement ces charges dans ce bain primaire, sous forme de poudre. Après cette incorporation, on procède à une agitation, afin de disperser ces charges dans le bain. Ce premier mode de réalisation n'est cependant pas illustré sur les figures.

A titre de variante, montrée sur la figure 1, on prépare tout d'abord un « slurry », à savoir une suspension épaisse et concentrée de solides dans un liquide. A cet effet, on disperse de manière préalable les charges dans un milieu aqueux ou polymère, éventuellement en présence de dispersants.

La concentration de charges dans ce « slurry » est bien supérieure à celle que ces charges possèdent, une fois dispersée dans l'encollage. Une fois ce « slurry » stabilisé, il est admis sous agitation dans le bain primaire 4, selon la flèche 8 à la figure 1. On obtient alors un bain final d'encollage, affecté de la référence 10, qui comprend le bain primaire 4 ainsi que le slurry 8.

Le pourcentage de charges présentes dans le « slurry » 8 est compris entre 10 et 80 % en poids. La proportion de « slurry » 8 présente dans le bain final d'encollage 10 est comprise entre 0,5 et 62,5 % en poids. Enfin la proportion de charges dans ce bain final 10 est comprise entre 0,05 et 50 % en poids.

Le bain final d'encollage 10 est alors transféré dans un bac 12. Les différents fils de chaîne 2, formés selon une nappe 14, sont alors revêtus par ce bain d'encollage 10, de manière classique. En aval de ce bac, la nappe de fils traverse, également de manière connue en soi, deux cylindres 16, formant un « foulard ». Enfin, cette nappe est séchée de façon habituelle, par exemple dans un four 18, ou encore sur des cylindres chauds.

Au terme des opérations ci-dessus, chaque fil de chaîne « nu » 2 est revêtu d'une gaine d'encollage 20. Comme cela est connu, cette gaine, ou encollage, qui présente une épaisseur très faible, permet de solidariser mutuellement les filaments constitutifs de chaque fil.

On affecte la référence 22 à chaque fil de chaîne encollé. Les différents fils de chaîne encollés 22 sont alors soumis à un tissage, de manière classique, avec des fils de trame 24. Ceci permet de former un tissu conforme à l'invention, désigné dans son ensemble par la référence 26.

La figure 3 représente, en coupe longitudinale, une portion de fil de chaîne encollé 22 comprenant le fil nu 2, autour duquel s'étend l'encollage 20. Ce dernier est représenté à plus grande échelle que dans la réalité, à des fins de clarté. Comme vu ci-dessus, cet encollage contient des charges, qui sont représentées de manière schématique et affectées de la référence 30.

Ces différentes charges 30 ne sont pas solubles, à savoir qu'elles restent présentes dans l'encollage 20, après l'opération consistant à les disperser dans cet encollage. Cependant, étant donné qu'elles sont dispersées, elles sont réparties de manière homogène dans cet encollage. En d'autres termes, ces charges se présentent sous forme de particules isolées, en ne formant sensiblement pas d'agglomérats. Par conséquent, la plus grande dimension des charges, au sein de l'encollage final, est sensiblement égale à leur plus grande dimension initiale, définie ci-dessus, à savoir inférieure à 100, notamment à 50 micromètres.

L'invention permet d'atteindre les objectifs précédemment mentionnés.

Comme cela est connu en soi, les fils utilisés pour former un tissage, en particulier réalisé en verre, sont résistants en traction, mais extrêmement fragiles dès qu'ils se trouvent pliés. Dans ces conditions, afin de réaliser ce tissage, il est nécessaire de former un encollage autour des fils de chaîne. Dans l'état de la technique, cet encollage sert uniquement à tisser les fibres et, dans la plupart des cas, il est éliminé immédiatement après l'opération de tissage.

Par ailleurs, il est bien connu que les charges, que se propose d'incorporer l'invention, sont par nature de forme aléatoire, et le plus souvent cristallines, à savoir par conséquent abrasives. Dans ces conditions, l'homme du métier n'est pas incité à introduire de telles charges dans l'encollage, dans la mesure où il estime que cette charge va contribuer à agresser le fil, ce qui est antinomique avec la présence de l'encollage, qui a au contraire pour fonction de protéger ce fil.

Or, la présente invention permet de vaincre ce préjugé de l'homme du métier. En effet, conformément à l'invention, les charges particulaires sont dispersées dans l'encollage, à savoir qu'elles sont sensiblement isolées et, par conséquent, présentent une très faible taille. Dans ces conditions, elles ne sont pas de nature à agresser le fil.

De plus, le fait d'introduire des charges dans l'encollage présente des avantages spécifiques.

En effet, ceci permet d'apporter au moins une propriété supplémentaire au tissu, sans procéder à un passage en machine supplémentaire.

La propriété considérée est apportée de manière unidirectionnelle, car les particules sont réparties seulement le long des fils de chaîne. Par comparaison, une enduction du tissu oblige à recouvrir, non seulement les fils de chaîne, mais également les fils de trame.

De plus, l'invention ne s'accompagne d'aucune modification sensible de la porosité du tissu, ni de son coefficient d'ouverture.

Enfin, l'invention est avantageuse en termes de procédé de fabrication, puisque la propriété supplémentaire peut être apportée sans augmenter le coût global du procédé de fabrication. En effet, l'ajout des charges est intégré à l'opération consistant à rapporter l'encollage. De plus, ce dernier ne représente qu'un faible taux de dépôt et ne concerne que les fils de chaîne.

Différents exemples de réalisation vont être présentés ci-après, à titre uniquement de modes de mise en oeuvre non limitatifs.

### Exemple 1 :

On ajoute lentement environ 6 kg de polyvinyle alcool, tel que l'ELVANOL T66 de DUPONT, dans 100 kg d'eau à température ambiante. On agite ensuite pendant 15 mn. Dès que la poudre est correctement dispersée, on chauffe jusqu'à 95°C, de manière à solubiliser le polyvinyle alcool. Le bain reste constamment sous agitation. Au bout d'une heure, la solution devient limpide et incolore.

Puis, on incorpore sous forme de pluie 1 kg d'alumine, telle que la BRH 26 de DURMAX. On maintient sous forte agitation pendant 15 mn. Puis, on transvase la dispersion ainsi obtenue, dans le bac d'encollage. On traite alors les fils de verre par imprégnation, puis on les sèche dans un four à une température voisine de 120°C. Ces fils de verre encollés sont alors tissés, en tant que fils de chaîne, avec des fils de trame non encollés.

Le tissu obtenu présente une propriété supplémentaire de conductivité thermique, sans modification substantielle de ses propriétés initiales. Afin d'illustrer la conservation de ces propriétés, on effectue des mesures de résistance mécanique, d'une part d'un fil réalisé classiquement et, d'autre part, du même fil traité conformément à l'invention.

A cet effet, on utilise des fils de verre EC5,5 tex 622 de AGY, que l'on traite selon le protocole ci-dessus. On effectue alors un test de résistance mécanique de ce fil traité conformément à l'invention, selon la norme NF B 38110. La résistance à la rupture est de 6,1 +/- 0,5 N alors que, par comparaison, la résistance à la rupture de ce même fil, traité de façon classique, est de 5,2 +/- 0,9 N.

La mise en oeuvre de ce premier exemple démontre donc que la présence de charges dans l'encollage ne contribue pas à agresser le fil, dans la mesure où ce dernier ne subit pas de variations sensibles de sa résistance mécanique.

### Exemple 2 :

On prépare une solution de polyvinyle alcool dans de l'eau, de la même façon que décrit au début de l'exemple 1. Puis, on ajoute une pré-dispersion de noir de carbone, du type noir A de SICOLOR. On maintient sous agitation forte pendant 15 mn.

On transvase alors la dispersion obtenue dans le bac d'encollage. Les fils de verre sont traités par imprégnation, puis séchés et tissés comme dans le mode de réalisation de l'exemple 1. On obtient un tissu coloré, en l'occurrence noir, sans traitement supplémentaire par imprégnation ni enduction. De plus, l'apport de cette couleur, conformément à l'invention, ne s'accompagne pas de modification sensible de la porosité du tissu.

A cet effet, on teste un tissu 3228 traité conformément à l'invention, au moyen de la norme ISO 9237. La mesure obtenue est de 267 +/- 8 I/dm²/min. Par comparaison, le même tissu encollé de manière classique, mais non teinté conformément à l'invention, présente une mesure de 260 +/- 10 I/dm²/min. Les deux tissus, respectivement classique et traité selon l'invention, présentent donc des porosités similaires.

### Exemple 3 (ne faisant pas part de l'invention) :

On met sous agitation 100 kg d'une dispersion aqueuse acrylique, telle l'ACRONET 280 de HISPANO QUIMICA. On agite pendant 15 mn.

On incorpore alors environ 6 kg d'une dispersion aqueuse ignifugeante, à base de phosphore, du type FLACAVON H14/112 de SCHILL ET SEILACHER. On maintient sous agitation forte pendant 15 mn, puis on transvase la dispersion ainsi obtenue dans le bac d'encollage. On traite les fils de verre par imprégnation, on les sèche et on les tisse, selon le même protocole que décrit dans les exemples 1 et 2.

On obtient alors un tissu ignifugé, sans traitement supplémentaire d'enduction. En d'autres termes, l'exemple 3 illustre un avantage économique de l'invention, en ce sens que cette dernière permet de faire une économie d'une étape de procédé.

## Revendications

1. Tissu (26) de fils, comprenant des fils de chaîne (22) comportant un ensimage et des fils de trame (24), ainsi qu'un encollage (20) de PVA présent uniquement à la périphérie des fils de chaîne, **caractérisé en ce que** cet encollage comprend au moins une charge (30), susceptible de modifier les propriétés de ce tissu.

2. Tissu selon la revendication 1, **caractérisé en ce que** le PVA représente de 0,5 à 5%, de préférence de 0,5 à 2 % du poids fil de chaîne + polymère.

3. Tissu selon la revendication 1, **caractérisé en ce que** la charge (30) est dispersée dans l'encollage (20) sous forme particulaire.

4. Tissu selon la revendication 3, **caractérisé en ce que** la plus grande dimension des particules de charge, dispersées dans l'encollage, est inférieure à 100 micromètres.

5. Tissu selon l'une quelconque des revendications précédentes, **caractérisé en ce que** les fils (22, 24) sont réalisés en verre, en polyester, en polyamide ou en carbone.

6. Tissu selon l'une quelconque des revendications précédentes, **caractérisé en ce que** les fils (22, 24) sont formés à partir de plusieurs filaments.

7. Tissu selon l'une quelconque des revendications précédentes, **caractérisé en ce que** la charge est propre à augmenter la conductivité thermique du tissu.

8. Tissu selon la revendication 7, **caractérisé en ce que** la charge comprend ou est formée de nitrure de bore, de nitrure d'alumine, d'alumine, de CaCO₃, de particules de cuivre, ou de nanotubes de carbone.

9. Procédé de fabrication du tissu (26) de fils selon l'une quelconque des revendications précédentes, dans lequel on prépare un bain final d'encollage (10), on revêt uniquement les fils de chaîne nus (2) au moyen de ce bain final d'encollage, de façon à former ledit encollage (20) de PVA, et on tisse les fils de chaîne encollés (22) et les fils de trame (24), **caractérisé en ce qu'**on prépare un bain primaire d'encollage (4), on disperse des particules de charge (30) dans ce bain primaire de manière à former le bain final d'encollage (10), avant de revêtir les fils de chaîne nus au moyen de ce bain final d'encollage.

10. Procédé de fabrication selon la revendication 9, **caractérisé en ce qu'**on forme une suspension (8) de type « slurry » à partir desdites particules de charge, avant d'incorporer cette suspension (8) dans le bain primaire (4).

11. Procédé de fabrication selon l'une des revendications 9 à 10, **caractérisé en ce que** le bain primaire d'encollage est formé par un polymère d'encollage proprement dit, ou est formé par une solution de ce polymère dans de l'eau, ou encore est formé par une dispersion de ce polymère dans de l'eau avec ajout de tensioactifs.

12. Procédé de fabrication selon l'une des revendications 9 à 11, **caractérisé en ce que** la proportion de charges (30) dans le bain final d'encollage (10) est comprise entre 0,05 et 50 % en poids

13. Procédé de fabrication selon l'une des revendications 9 à 12, **caractérisé en ce que** l'on réalise l'encollage simultané de plusieurs fils de chaîne parallèles entre eux, après une opération d'ourdissage.

14. Procédé de fabrication selon l'une des revendications 9 à 13, **caractérisé en ce que** le PVA représente de 0,5 à 5% du poids fil de chaîne + polymère.

## Patentansprüche

1. Fadengewebe (26), aufweisend Kettfäden (22) mit einer Imprägnierung und Schussfäden (24), sowie eine Schlichte (20) aus PVA, die einzig an der Peripherie der Kettfäden vorliegt, **dadurch gekennzeichnet, dass** diese Schlichte wenigstens einen Füller (30) aufweist, der geeignet ist, die Eigenschaften des Gewebes zu modifizieren.

2. Gewebe gemäß Anspruch 1, **dadurch gekennzeichnet, dass** der PVA 0,5 bis 5%, bevorzugt 0,5 bis 2%, des Gewichts Kettfaden + Polymer hat.

3. Gewebe gemäß Anspruch 1, **dadurch gekennzeichnet, dass** der Füller (30) in der Form von Partikeln in der Schlichte (20) verteilt ist.

4. Gewebe gemäß Anspruch 3, **dadurch gekennzeichnet, dass** die größte Abmessung der Füller-Partikel, die in der Schlichte verteilt sind, kleiner als 100 Mikrometer ist.

5. Gewebe gemäß irgendeinem der vorhergehenden Ansprüche, **dadurch gekennzeichnet, dass** die Fäden (22, 24) aus Glas, Polyester, Polyamid oder Karbon sind.

6. Gewebe gemäß irgendeinem der vorhergehenden Ansprüche, **dadurch gekennzeichnet, dass** die Fäden (22, 24) ausgehend von mehreren Fasern gemacht sind.

7. Gewebe gemäß irgendeinem der vorhergehenden Ansprüche, **dadurch gekennzeichnet, dass** der Füller geeignet ist, die thermische Leitfähigkeit des Gewebes zu erhöhen.

8. Gewebe gemäß Anspruch 7, **dadurch gekennzeichnet, dass** der Füller aufweist oder gebildet ist aus Bornitrid, Aluminiumoxynitrid, Aluminiumoxid, CaCO₃, Kupferpartikeln oder Karbonnanoröhrchen.

9. Verfahren zur Herstellung des Fadengewebes (26) gemäß irgendeinem der vorhergehenden Ansprüche, wobei man ein Abschlussbad von Schlichte (10) bereitstellt, man einzig die blanken Kettfäden (2) mittels des Abschlussbads von Schlichte beschichtet, so dass die besagte Schlichte (20) aus PVA gebildet wird, und man die mit der Schlichte versehenen Kettfäden (22) und die Schussfäden (24) verwebt, **dadurch gekennzeichnet, dass** man ein Primärbad von Schlichte (4) bereitstellt, man die Partikel des Füllers (30) in dem Primärbad verteilt, um das Abschlussbad von Schlichte (10) zu bilden vor dem Beschichten der blanken Kettfäden mittels des Abschlussbads von Schlichte.

10. Verfahren zur Herstellung gemäß Anspruch 9, **dadurch gekennzeichnet, dass** man eine Suspension (8) vom Typ "Schlamm" bildet ausgehend von den besagten Partikeln des Füllers vor dem Einbringen dieser Suspension (8) in das Primärbad (4).

11. Verfahren zur Herstellung gemäß einem der Ansprüche 9 bis 10, **dadurch gekennzeichnet, dass** das Primärbad von Schlichte gebildet ist aus einem Polymer der Schlichte als solches oder gebildet ist von einer Lösung dieses Polymers in Wasser oder auch gebildet ist von einer Dispersion dieses Polymers in Wasser mit Tensid-Zusatz.

12. Verfahren zur Herstellung gemäß einem der Ansprüche 9 bis 11, **dadurch gekennzeichnet, dass** der Anteil der Füller (30) in dem Abschlussbad von Schlichte (10) zwischen 0,05 und 50 Gewichts-% beträgt.

13. Verfahren zur Herstellung gemäß irgendeinem der Ansprüche 9 bis 12, **dadurch gekennzeichnet, dass** man nach einem Schärenvorgang das gleichzeitige Versehen mehrerer zueinander paralleler Kettfäden mit Schlichte realisiert.

14. Verfahren zur Herstellung gemäß einem der Ansprüche 9 bis 13, **dadurch gekennzeichnet, dass** der PVA 0,5 bis 5% des Gewichts Kettfaden + Polymer hat.

## Claims

1. Yarn fabric (26), comprising warp yarns (22) with a coating sizing and weft yarns (24), and also a slashing size (20) of PVA present solely at the periphery of the warp yarns, **characterized in that** this slashing size comprises at least one filler (30) capable of modifying the properties of this fabric.

2. Fabric according to Claim 1, **characterized in that** PVA represents from 0.5 to 5%, preferably from 0.5 to 2% of the warp yarn + polymer weight.

3. Fabric according to Claim 1, **characterized in that** the filler (30) is dispersed in the slashing size (20) in particulate form.

4. Fabric according to Claim 3, **characterized in that** the largest dimension of the filler particles, dispersed in the slashing size, is less than 100 microns.

5. Fabric according to any one of the preceding claims, **characterized in that** the yarns (22, 24) are made from glass, polyester, polyamide or carbon.

6. Fabric according to any one of the preceding claims, **characterized in that** the yarns (22, 24) are formed from several filaments.

7. Fabric according to any one of the preceding claims, **characterized in that** the filler is suitable for increasing the thermal conductivity of the fabric.

8. Fabric according to Claim 7, **characterized in that** the filler comprises or is formed from boron nitride, alumina nitride, alumina, CaCO₃, copper particles or carbon nanotubes.

9. Process for manufacturing the yarn fabric (26) according to any one of the preceding claims, in which a final slashing sizing bath (10) is prepared, only the bare warp yarns (2) are coated using this final slashing sizing bath, so as to form said slashing size (20) of PVA, and the slashing sized warp yarns (22) and the weft yearns (24) are woven, **characterized in that** a primary slashing sizing bath (4) is prepared, particles of filler (30) are dispersed in this primary bath so as to form the final slashing sizing bath (10), before coating the bare warp yarns using this final slashing sizing bath.

10. Manufacturing process according to Claim 9, **characterized in that** a "slurry"-type suspension (8) is formed from said filler particles, before incorporating this suspension (8) into the primary bath (4).

11. Manufacturing process according to one of Claims 9 to 10, **characterized in that** the primary slashing sizing bath is formed by a slashing sizing polymer itself, or is formed by a solution of this polymer in water, or else is formed by a dispersion of this polymer in water with addition of surfactants.

12. Manufacturing process according to one of Claims 9 to 11, **characterized in that** the proportion of fillers (30) in the final slashing sizing bath (10) is between 0.05 and 50% by weight.

13. Manufacturing process according to one of Claims 9 to 12, **characterized in that** the simultaneous slashing sizing of several warp yarns that are parallel to one another is carried out, after a warping operation.

14. Manufacturing process according to one of Claims 9 to 13, **characterized in that** PVA represents from 0.5 to 5% of the warp yarn + polymer weight.
